# FASCICULE DE BREVET EUROPEEN

(11) **EP 1 151 499 B1**
(45) Date de publication et mention de la délivrance du brevet: **24.03.2010**
(21) Numéro de dépôt: 00902696.4
(22) Date de dépôt: 31.01.2000
(51) Int. Cl.: H01R 9/24, H02B 1/26, H01R 4/48, H01R 13/35, H01H 71/02

(54) **ENSEMBLE ELECTRIQUE INTERRUPTEUR**
ELEKTRISCHE SCHALTERANORDNUNG
ELECTRIC SWITCH APPLIANCE AND QUICK-ASSEMBLY

(30) Priorité: 05.02.1999 FR 9901534
(43) Date de publication de la demande: 07.11.2001
(73) Titulaire: Schneider Electric Industries SAS, 92500 Rueil-Malmaison (FR)
(72) Inventeur: ALEXANDRE, Pascal, F-78580 Maule (FR); PAGGI, Serge, F-21490 Ruffey-lès-Echirey (FR)
(86) Numéro de dépôt international: PCT/FR2000/000223
(87) Numéro de publication internationale: WO 2000/046880

(56) Documents cités:
- EP-A- 0 626 712
- EP-A- 0 867 993
- CA-A- 1 109 132
- US-A- 4 729 744

## Description

La présente invention concerne un ensemble électrique interrupteur comprenant deux appareils multipolaires dont chacun comprend un corps extérieur doté d'une face avant, de faces transversales haute et basse, de faces latérales et d'une face arrière notamment de fixation à un support, l'un au moins des appareils ayant des propriétés de coupure ; les appareils possèdent des liaisons de puissance polaires comportant des conducteurs internes de puissance logés dans le corps et des bornes de connexion de puissance amont et/ou aval présentant des ouvertures qui débouchent sur la face avant pour connecter des conducteurs extérieurs aux conducteurs de puissance.

Un tel ensemble peut être notamment un ensemble dit de départ-moteur. L'appareil interrupteur peut être un contacteur, un disjoncteur, un sectionneur ou autre appareil interrupteur analogue utilisable en distribution ou commande électrique basse tension.

Un tel ensemble est décrit dans le document EP-0 869 594. Il est souhaitable d'en faciliter l'assemblage mécanique et il est en outre souhaitable que l'opérateur puisse monter et câbler manuellement, c'est-à-dire sans devoir recourir à un outil, un ensemble de départ-moteur, ou plus généralement un ensemble d'appareils électriques interrupteurs.
Le document EP0867993 décrit également un tel ensemble. Les documents CA 1,109,132 et EP 0 893 847 décrivent pour leur part des bornes élastiques utilisables dans des appareils électriques multipolaires.

La présente invention a pour but de simplifier la constitution d'un ensemble d'appareils électriques interrupteurs, notamment d'un ensemble de départ-moteur, et d'en permettre un assemblage facile et un câblage rapide tout en évitant le plus possible de recourir à un outil.

Selon l'invention, dans un ensemble du type décrit, des moyens de couplage sont prévus pour maintenir les deux appareils mécaniquement couplés, un bloc d'interconnexion multipolaire est appliqué l'une au moins des faces avant des appareils couplés et comporte des broches enfichées dans les bornes de puissance en regard des pôles correspondants des appareils pour assurer les liaisons polaires respectives entre les appareils, et les broches du bloc et les bornes de connexion de puissance en regard coopèrent par effet élastique.

Les moyens de couplage peuvent être un socle commun ou une pièce d'accrochage, mais sont de préférence prévus sur les corps des appareils afin d'assurer un couplage direct des corps. Les bornes de connexion sont de préférence agencées pour permettre la connexion de câbles avec outil et la connexion de broches sans outil ; elles peuvent aussi être du type à tulipe avec serrage radial. De la sorte, la liaison électrique de puissance entre les appareils a lieu, après leur couplage sans pièce intermédiaire(de préférence par accrochage mutuel), par engagement d'un bloc multipolaire d'interconnexion à broches, et ce sans nécessiter d'outil.

Il est avantageux que les moyens de couplage comprennent des moyens d'emboîtement à bossages ou fentes prévus sur une face haute ou basse d'un bornier de puissance spécifique formant en partie ou en totalité la face haute ou basse du corps d'un appareil. L'appareil en question peut ainsi être fabriqué dans une version standard à bornes à vis, aisément adaptable au couplage décrit par le simple apport d'un bornier de puissance à bornes élastiques ou à tulipes. Des moyens d'encliquetage permettent aussi de maintenir le boîtier du contacteur directement solidaire du boîtier du disjoncteur,

La description va être faite ci-après d'un mode de réalisation non limitatif de l'invention, en regard des dessins annexés.
La figure 1 représente en vue de côté un ensemble de départ-moteur conforme à l'invention.
La figure 2 montre l'ensemble de départ-moteur avec ses divers constituants éclatés, avec une variante d'alimentation.
La figure 3 est une vue en perspective du contacteur.
La figure 4 montre une borne élastique utilisée dans les constituants de l'ensemble de départ-moteur.
La figure 5 représente une variante de l'ensemble selon l'invention.
La figure 6 illustre un détail de connexion de puissance de l'ensemble de la figure 5.

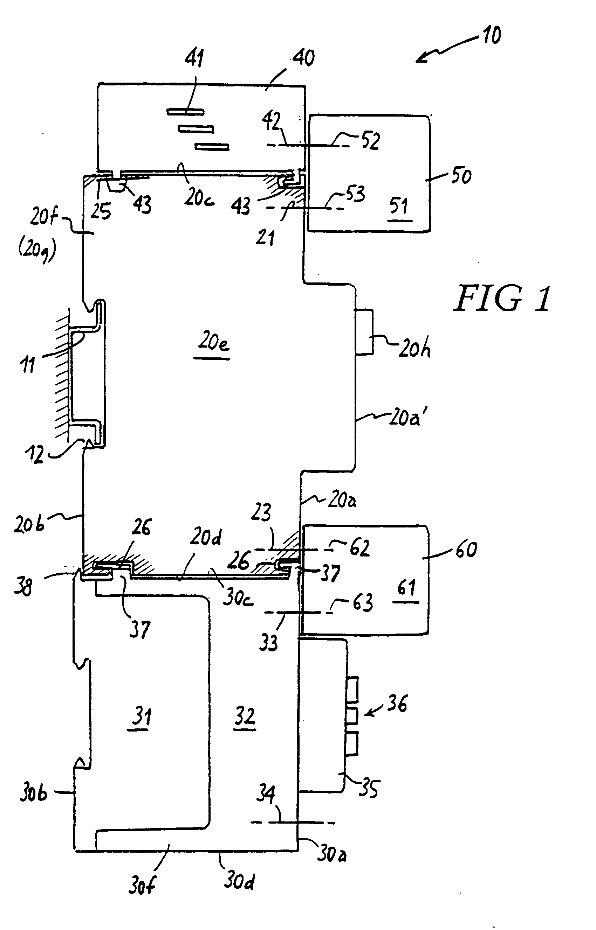

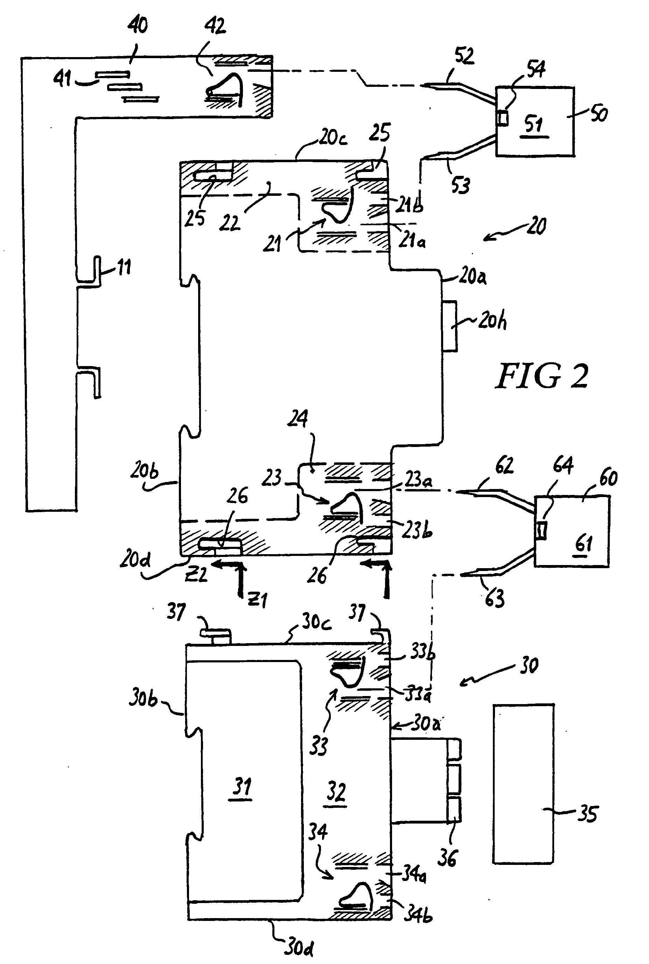

L'ensemble de départ-moteur 10 illustré sur les figures 1 et 2 comprend un disjoncteur 20 et un contacteur 30 mécaniquement couplés. L'ensemble est fixé à un support arrière 11 tel qu'un rail ou autre support par l'intermédiaire de moyens usuels 12 de fixation, notamment d'encliquetage, prévus à l'arrière du disjoncteur, tandis que le contacteur 30 est fixé directement au disjoncteur 20 au-dessous de celui-ci. Les qualificatifs avant, arrière, haut et bas sont attribués aux éléments de l'ensemble en fonction du montage normal de cet ensemble et de sa desserte par un opérateur, qui serait situé sur la droite des figures 1 et 2.

Le disjoncteur 20 présente une face avant 20a située dans un plan P1, une face arrière 20b, des faces haute et basse 20c,20d et des faces latérales 20e et le contacteur présente de même une face avant 30a, par exemple située aussi dans le plan P1, ainsi qu'une face arrière 30b, des faces haute et basse 30c,30d et des faces latérales 30e. Dans ce mode de réalisation, le disjoncteur a des bornes de puissance à serrage élastique, ci-après désignées "bornes élastiques", à savoir des bornes amont 21 et des bornes aval 23 situées près de sa face avant. Lorsque le corps extérieur 20f du disjoncteur est formé par son boîtier proprement dit 20g (figure 1), les bornes 21,23 sont logées dans ce boîtier ; lorsque le corps extérieur 20f du disjoncteur est formé en partie par le boîtier et en partie par des borniers respectifs amont 22 et aval 24 fixés aux parties haute et basse du boîtier (figure 2), les bornes 21,23 sont alors logées dans les borniers. Des boutons usuels marche / arrêt 20h ou autre éléments de dialogue sont disposés sur une partie 20a' de la face avant 20a du disjoncteur, en avancée par rapport au reste de la face 20a, pour agir sur un mécanisme interrompant des liaisons internes de courant reliées aux bornes précitées. Une ouverture 20i est prévue dans la face 20a au-dessous des bornes amont 21 pour loger un additif de signalisation non représenté.

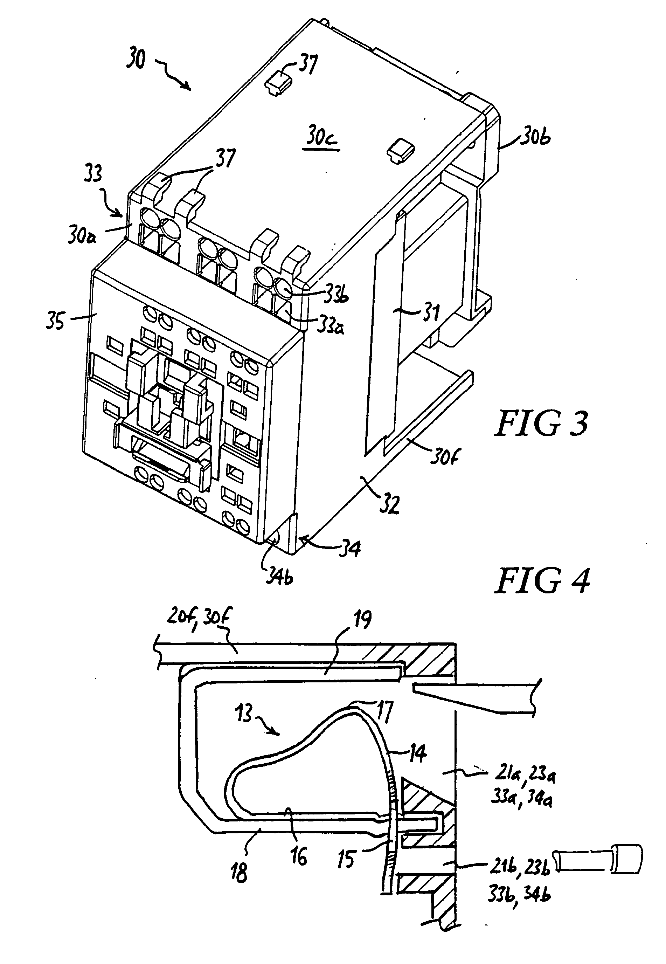

Chaque borne 21,23 du disjoncteur comprend une cage élastique 13 de type connu (voir figure 4) présentant une branche 14 de serrage munie d'une ouverture 15 pour serrer par coincement un câble, une branche 16 appliquée sur un support conducteur 18 et une boucle à portion dorsale convexe 17 reliant les branches 14,16. Un câble peut être introduit dans l'ouverture 15 après desserrage de la cage par pression d'un outil exercée sur la boucle 17 ; une broche, dans le cas présente une broche d'interconnexion entre les deux appareils, peut être mise en contact sans outil avec une pièce conductrice 19 par pression directe sur la boucle 17; cette pièce 19 est disposée parallèlement à la branche 16 à l'opposé de la cage.

Chaque borne 21,23 du disjoncteur est ainsi agencée pour permettre la connexion d'un câble avec outil et la connexion d'une broche d'interconnexion sans outil. Le logement de borne s'ouvre vers la face avant 20a par un passage 21a,23a d'introduction d'un câble à coincer dans l'ouverture 15 et par un passage 21 b,23b d'introduction, soit d'un outil capable de desserrer la borne par pression sur la boucle, soit d'une broche d'interconnexion, comme décrit plus loin.

L'alimentation des bornes 21 est assurée par un jeu 40 de conducteurs de puissance, notamment de barres, posé et fixé sur la face haute 20c du disjoncteur. Le jeu de barres 40 comprend des barres de distribution 41 et des bornes 42 dont chacune est reliée à l'une des barres. Dans la forme d'exécution de la figure 1, le jeu de barres 40 comporte des bossages 43, par exemple des talons et des saillies à profil approprié, destinés à coopérer avec des fentes ou boutonnières d'emboîtement 25 prévus selon le cas dans la face haute 20c du boîtier 20g ou du bornier amont 22 pour ancrer le jeu de barres 40 au disjoncteur 20. En variante, l'appareil amont emboîté sur le disjoncteur pourrait être un sectionneur ou limiteur. Dans la forme d'exécution de la figure 2, le jeu de barres 40 comporte le support arrière 11 du disjoncteur et n'a plus besoin d'être emboîté sur la face 20c du disjoncteur.

Un bloc multipolaire d'interconnexion de puissance 50 est prévu pour assurer l'alimentation du disjoncteur. Il comporte un corps isolant 51 et des broches amont 52 et aval 53 destinées à s'enficher dans les bornes élastiques respectives 42,21 du jeu de barres et du disjoncteur. Un organe de retenue 54 assure le blocage du bloc contre le disjoncteur ou le jeu de barres pour éviter son décrochage intempestif.

Le boîtier 20g du disjoncteur, ou son bornier aval 24, présente des fentes 26, dont certaines en forme de boutonnières, prévues sur la face basse 20d pour coopérer comme on va le voir avec des formes complémentaires du contacteur en vue d'assurer la fixation directe de celui-ci au disjoncteur.

Le contacteur 30 offre une structure telle que son corps extérieur 30f est pour l'essentiel formé par un boîtier d'arc 31 logeant les contacts fixes et mobiles et par un bornier de puissance 32 fixé au boîtier d'arc. Le bornier 32 loge des bornes élastiques amont 33 et des bornes élastiques aval 34 dotées de cages 13 similaires à celles du disjoncteur.

Les bornes élastiques 33,34 du contacteur sont semblables à celles 21,23 du disjoncteur. Elles s'ouvrent vers la face avant 30a du corps 30f par des passages 33a,34a d'engagement d'une broche d'interconnexion et par un passage 33b,34b d'engagement d'un câble à connecter dans l'ouverture de coincement 15 de la cage élastique 15. Quand on utilise une broche d'interconnexion, le passage 33b,34b n'est pas utilisé. Quand on utilise un câble, le passage 33a,34a sert à introduire un outil forçant le desserrage de la cage.

Au lieu d'un bornier monobloc, on peut bien sûr concevoir deux borniers distincts amont et aval rapportés sur le boîtier d'arc 31. Un bornier de contrôle et commande 35 logeant des bornes élastiques de liaison avec la bobine et avec des organes de signalisation est fixé à l'avant du bornier de puissance de manière à laisser passer des saillies 36 de fixation et de manoeuvre d'un éventuel bloc additif. Le bornier constitue l'essentiel de la face haute 30c et de la face basse 30d du contacteur et comprend au moins sur la face haute des bossages 37 destinés à coopérer avec les fentes d'emboîtement bas 26 du disjoncteur 20. On notera que la face 20a' du corps du disjoncteur et la face avant 30a' du bornier 35 du contacteur sont dans un même plan P2 parallèle et en avancée par rapport à P1.

Le mouvement d'engagement du contacteur s'effectue par un premier déplacement Z1 par exemple parallèle aux faces avant 20a,30a des deux appareils, puis un deuxième déplacement Z2 perpendiculaire à ces faces. Un élément de retenue 38, notamment d'encliquetage, prévu sur la face haute ou arrière du contacteur, assure son blocage contre tout mouvement d'arrachement vers l'avant alors qu'il est accroché au disjoncteur. Des moyens de desserrage élastique de préférence par manoeuvre manuelle sont associés à l'élément 38 pour l'effacer, afin de permettre de désolidariser le contacteur du disjoncteur.

Chaque borne 33,34 s'ouvre vers la face avant 30a du contacteur par un passage 33a,34a pour un câble à connecter dans l'ouverture 15 de la branche de coincement de la cage élastique et un passage 33b,34b pour un outil de desserrage ou pour une broche d'interconnexion avec le disjoncteur.

Un bloc multipolaire d'interconnexion de puissance 60, de préférence identique au bloc 50, comporte un corps isolant 61, des broches amont 62 et aval 63 et un élément de retenue 64. Les broches sont destinées à s'enficher sans outil dans les bornes élastiques respectives aval 23 du disjoncteur et amont 33 du contacteur et l'élément de retenue 64 empêche l'arrachement intempestif du bloc. Un autre bloc peut être prévu pour connecter le contacteur à la charge.

L'assemblage de l'ensemble de départ-moteur 10 va être décrit en regard de la figure 2. Le disjoncteur est fixé sur son support 11 faisant partie du jeu de barres 40, puis le contacteur est emboîté sous le disjoncteur, pour lui être couplé dans une position bien déterminée, et les broches des blocs d'interconnexion 60 sont enfichées dans les bornes élastiques de puissance 23,33, en étant maintenues en position enfichée par leur élément de retenue 64. L'alimentation du tout est assurée par l'insertion des broches des blocs d'interconnexion 50 dans les bornes 21 du disjoncteur et 42 du jeu de barres. On notera que le montage et le démontage de l'ensemble ont lieu sans nécessiter d'outil.

Plusieurs ensembles 10 peuvent bien entendu être juxtaposés par apposition des faces latérales 20e,30e de leurs divers couples contacteurs - disjoncteurs. Le contacteur ici de type électromécanique, pourrait être de type statique. De plus, le contacteur peut être doté sur sa face basse 30d de bossages ou fentes d'emboîtement pour porter un module additif ou de communication ou plus généralement un appareil annexe à assembler et connecter rapidement. Il va de soi que les bossages et fentes d'emboîtement prévus sur les deux appareils peuvent être inversés.

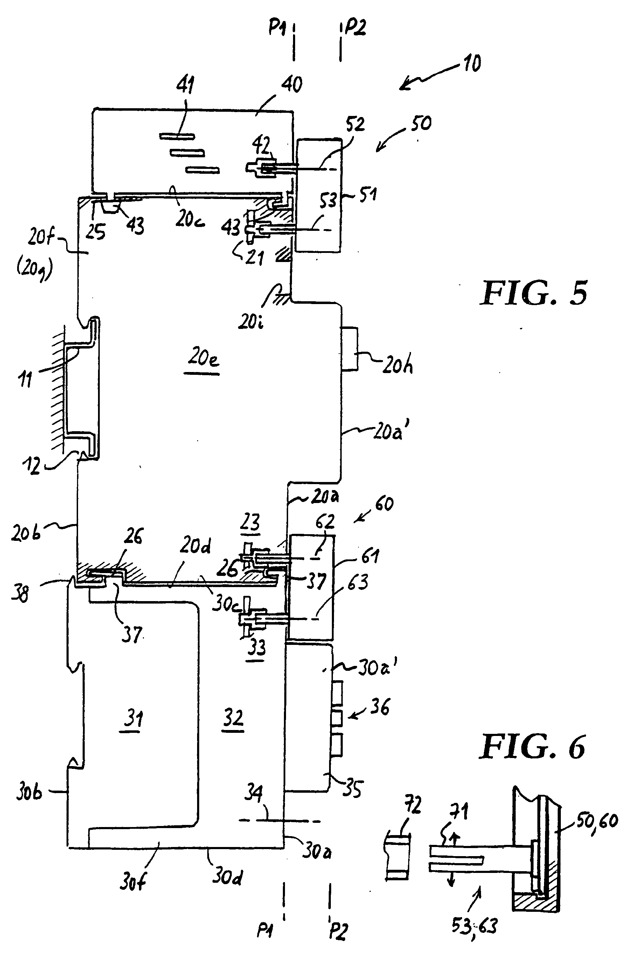

Dans le mode de réalisation de la figure 5, les blocs multipolaires 50,60 présentent des broches 52,53,62,63 dont les extrémités 71 ont une configuration élastique, en particulier dans le sens radial comme indiqué figure 6. Les bornes correspondantes 42,21,23,33 des appareils présentent des douilles rigides 72 constituées par des parties des pièces conductrices telles que 19 ou par des pièces annexes fixées sur ces pièces conductrices. La pose des blocs 50,60 s'effectue là encore par un mouvement perpendiculaire aux faces avant 20a,30a des appareils. En variante, les douilles peuvent être des tulipes élastiques coopérant avec des broches rigides.

Il convient de noter que le bloc d'interconnexion multipolaire amont 50 a une hauteur telle qu'il laisse dégagée l'ouverture 20i dédiée à l'introduction d'un additif dans le corps 20f du disjoncteur, et que les blocs d'interconnexion multipolaire 50,60 sont quasiment encastrés, avec une profondeur telle que leur face avant est sensiblement alignée avec le plan P2 des faces de dialogue et de contrôle des appareils.

## Revendications

1. Ensemble électrique interrupteur comprenant :
- deux appareils multipolaires (20,30,40) dont chacun comprend un corps extérieur (20f,30f) doté d'une face avant (20a,30a), de faces transversales haute et basse, de faces latérales et d'une face arrière notamment de fixation à un support, l'un au moins des appareils ayant des propriétés de coupure,
- des liaisons de puissance polaires comportant des conducteurs internes de puissance logés dans le corps et des bornes de connexion de puissance amont (21,33) et/ou aval (23,34) présentant des ouvertures qui débouchent sur la face avant pour connecter des conducteurs extérieurs aux conducteurs de puissance,
***caractérisé par le fait que** :*
- des moyens de couplage (37,26) sont prévus pour maintenir les deux appareils mécaniquement couplés,
- un bloc d'interconnexion multipolaire (50,60) est appliqué sur l'une au moins des faces avant (20a,30a) des appareils couplés et comporte des broches (52,53;62,63) enfichées dans les bornes de puissance en regard (23,33;42,21) des pôles correspondants pour assurer les liaisons polaires respectives entre les appareils,
- les broches (62,63;52,53) du bloc et les bornes de connexion de puissance en regard (23,33;42,21) coopèrent par effet élastique,
- un bornier de puissance (32,24) comprenant les bornes de puissance (33,34;21,23) est fixé au corps extérieur d'au moins l'un des appareils pour constituer, par sa face haute ou basse, en partie ou en totalité la face transversale haute ou basse (30c,20d) de celui-ci, et que les moyens de couplage (37,26) comprennent des moyens d'emboîtement à bossages ou fentes prévus sur une face haute ou basse du bornier de puissance (32,24).

2. Ensemble électrique selon la revendication 1, **caractérisé par le fait que** les bornes de connexion de puissance (33,34;21,23;42) sont du type à cage élastique (13) agencées pour permettre la connexion de câbles avec outil et la connexion de broches sans outil.

3. Ensemble électrique selon la revendication 1, **caractérisé par le fait que** les bornes de connexion de puissance (33,34;21,23;42) ou les broches (62,63;52,53) du bloc multipolaire (50,60) sont du type à douille à serrage radial.

4. Ensemble électrique selon la revendication 1, **caractérisé par le fait que** les moyens de couplage (37,26) sont prévus sur les corps des appareils et agencés pour permettre un accrochage direct des appareils par déplacement mutuel (Z2) perpendiculaire à leurs faces avant (30a,20a).

5. Ensemble électrique selon la revendication 1, **caractérisé par le fait que** les moyens de couplage (37,26) comprennent des moyens d'encliquetage direct (38) du corps d'un appareil sur le corps de l'autre appareil, les moyens assurant le blocage de l'appareil contre tout mouvement d'arrachement vers l'avant.

6. Ensemble électrique selon la revendication 1, **caractérisé par le fait que** l'un des deux appareil multipolaires est un disjoncteur (20) et **par le fait qu'**il comporte un bloc d'interconnexion multipolaire amont (50) prévu pour assurer l'alimentation du disjoncteur (20), ledit bloc d'interconnexion multipolaire amont ayant une hauteur telle qu'il laisse dégagée une ouverture (20i) destinée à l'introduction d'un additif dans le corps (20f) du disjoncteur (20).

7. Ensemble électrique selon la revendication 1, **caractérisé par le fait que** l'un des deux appareil multipolaires est un disjoncteur (20) et l'autre appareil multipolaire est un contacteur (30) et **par le fait qu'**il comprend des blocs d'interconnexion multipolaire (50,60) ayant chacun une profondeur telle que leur face avant est sensiblement alignée avec un plan (P2) incluant la face avant (20a') du corps du disjoncteur et la face avant (30a') du bornier (35) du contacteur.

8. Ensemble comprenant deux appareils interrupteurs superposés, notamment ensemble de départ-moteur, les deux appareils présentant chacun un corps extérieur (30f,20f) muni d'une face avant, d'une face arrière, de faces transversales haute et basse et de faces latérales, et des moyens de fixation de l'un des appareils à un support arrière,
***caractérisé par le fait que***
- l'un des appareils (30,20) au moins comprend un bornier de puissance (32,24) rapporté sur son corps extérieur et muni près de sa face avant (30a,20a) de bornes (33,23) s'ouvrant sur celle-ci par des passages (33a,23a) de connexion,
- l'appareil inférieur (30) est accroché directement à l'appareil supérieur (20) par son bornier de puissance (32,24), qui est doté sur une face plane basse ou haute (30c,20d) de premiers bossages ou fentes (37) destinés à s'emboîter dans des seconds bossages ou fentes (26) de forme complémentaire prévus sur la face haute ou basse (20d,30c) de l'autre appareil (20,30).

9. Ensemble selon la revendication 8, **caractérisé par le fait que** les deux appareils (20,30) présentent des bornes élastiques (23,33) et que le raccordement entre les bornes élastiques des deux appareils est assuré par un bloc d'interconnexion multipolaire (60) à couples de broches rigides (62,63) destinées à pénétrer dans les bornes élastiques.

10. Ensemble selon la revendication 8, **caractérisé par le fait que** les deux appareils (20,30) présentent des bornes (23,33) à douilles rigides (72) et que le raccordement entre les bornes des deux appareils est assuré par un bloc d'interconnexion multipolaire (60) à couples de broches élastiques (62,63) destinées à pénétrer par des extrémités élastiques (71) dans les bornes.

11. Ensemble selon la revendication 9, **caractérisé par le fait que** le bloc d'interconnexion multipolaire (60) est engagé et établit le contact sans outil dans les bornes élastiques (23,33) des deux appareils, celles-ci étant du type à cage élastique (13) aptes à la connexion de câbles avec outil et à la connexion de broches sans outil.

## Claims

1. Electrical switch assembly, comprising:
- two multipole devices (20, 30, 40), each of which comprises an outer body (20f, 30f) having a front face (20a, 30a), top and bottom transverse faces, lateral faces and a rear face, especially for being fastened to a support, at least one of the devices having switching properties;
- polar power links comprising internal power conductors housed in the body and upstream power connection terminals (21, 33) and/or downstream power connection terminals (23, 34) having openings that open onto the front face so as to connect external conductors to the power conductors,
**characterized in that**:
- coupling means (37, 26) are provided for keeping the two devices mechanically coupled;
- a multipole interconnection block (50, 60) is applied on at least one of the front faces (20a, 30a) of the coupled devices and comprises pins (52, 53; 62, 63) plugged into the facing power terminals (23, 33; 42, 21) of the corresponding poles in order to provide the respective polar links between the devices;
- the pins (62, 63; 52, 53) of the block and the facing power connection terminals (23, 33; 42, 21) cooperate through an elastic effect; and
- a power terminal block (32, 24) comprising the power terminals (33, 34; 21, 23) is fastened to the outer body of at least one of the devices in order to constitute, via its top or bottom face, partly or completely the top or bottom transverse face (30c, 20d) thereof,
and **in that** the coupling means (37, 26) comprise interlocking means having protrusions or slots, said means being provided on a top or bottom face of the power terminal block (32, 24).

2. Electrical assembly according to Claim 1, **characterized in that** the power connection terminals (33, 34; 21, 23; 42) are of the elastic cage type (13) which are designed to allow cable connection with a tool and pin connection without a tool.

3. Electrical assembly according to Claim 1, **characterized in that** the power connection terminals (33, 34; 21, 23; 42) or the pins (62, 63; 52, 53) of the multipole block (50, 60) are of the radially clamping socket type.

4. Electrical assembly according to Claim 1, **characterized in that** the coupling means (37, 26) are provided on the bodies of the devices and designed to allow direct fastening of the devices by mutual displacement (Z2) perpendicular to their front faces (30a, 20a).

5. Electrical assembly according to Claim 1, **characterized in that** the coupling means (37, 26) comprise direct snap-fastening means (38), for fastening the body of one device onto the body of the other device, the means ensuring that the device is prevented from undergoing any forward pull-out movement.

6. Electrical assembly according to Claim 1, **characterized in that** one of the two multipole devices is a circuit breaker (20) and **in that** it includes an upstream multipole interconnection block (50) designed to supply the circuit breaker (20) with power, said upstream multipole interconnection block having a height such that it leaves an opening (20i) free, said opening being intended for the insertion of an additive means into the body (20f) of the circuit breaker (20).

7. Electrical assembly according to Claim 1, **characterized in that** one of the two multipole devices is a circuit breaker (20) and the other multipole device is a contactor (30) and **in that** it includes multipole interconnection blocks (50, 60) each having a depth such that their front face is substantially aligned with a plane (P2) that includes the front face (20a') of the body of the circuit breaker and the front face (30a') of the terminal block (35) of the contactor.

8. Assembly comprising two superposed switch devices, especially a starter motor assembly, the two devices each having an outer body (30f, 20f) having a front face, a rear face, top and bottom transverse faces and lateral faces, and means for fastening one of the devices to a rear support,
**characterized in that**:
- at least one of the devices (30, 20) comprises a power terminal block (32, 24) attached to its outer body and provided, close to its front face (30a, 20a), with terminals (33, 23) that open onto said front face via connection passages (33a, 23a); and
- the lower device (30) is fastened directly to the upper device (20) via its power terminal block (32, 24), which is provided, on a bottom or top flat face (30c, 20d), with first protrusions or slots (37) intended for being interlocked in second protrusions or slots (26) of complementary shape that are provided on the top or bottom face (20d, 30c) of the other device (20, 30).

9. Assembly according to Claim 8, **characterized in that** the two devices (20, 30) have elastic terminals (23, 33) and **in that** the connection between the elastic terminals of the two devices is provided by a multipole interconnection block (60) having pairs of rigid pins (62, 63) intended for penetrating into the elastic terminals.

10. Assembly according to Claim 8, **characterized in that** the two devices (20, 30) have terminals (23, 33) having rigid sockets (72) and **in that** the connection between the terminals of the two devices is provided by a multipole interconnection block (60) having pairs of elastic pins (62, 63) intended to penetrate the terminals via elastic ends (71).

11. Assembly according to Claim 9, **characterized in that** the multipole interconnection block (60) is engaged and establishes the tool-free contact in the elastic terminals (23, 33) of the two devices, said terminals being of the type comprising an elastic cage (13), which are capable of connecting cables with a tool and connecting pins without a tool.

## Patentansprüche

1. Elektrische Schalteranordnung, die enthält:
- zwei mehrpolige Geräte (20, 30, 40), von denen jedes einen äußeren Körper (20f, 30f) enthält, der mit einer Vorderseite (20a, 30a), mit einer oberen und unteren Querseite, mit Seitenwänden und mit einer Rückseite insbesondere zur Befestigung an einem Träger versehen ist, wobei mindestens eines der Geräte Abschalteigenschaften hat,
- Leistungs-Polverbindungen, die im Körper angeordnete innere Leistungsleiter und vordere (21, 33) und/oder hintere (23, 34) Leistungsanschlussklemmen aufweisen, die Öffnungen besitzen, welche auf die Vorderseite münden, um äußere Leiter mit den Leistungsleitern zu verbinden,
**dadurch gekennzeichnet, dass**
- Kopplungseinrichtungen (37, 26) vorgesehen sind, um die zwei Geräte mechanisch gekoppelt zu halten,
- ein mehrpoliger Zusammenschaltungsblock (50, 60) auf mindestens eine der Vorderseiten (20a, 30a) der gekoppelten Geräte aufgesetzt wird und Kontaktstifte (52, 53; 62, 63) aufweist, die in die gegenüberliegenden Leistungsklemmen (23, 33; 42, 21) der entsprechenden Pole eingesteckt werden, um die jeweiligen Polverbindungen zwischen den Geräten zu gewährleisten,
- die Kontaktstifte (62, 63; 52, 53) des Blocks und die gegenüberliegenden Leistungsanschlussklemmen (23, 33; 42, 21) durch elastische Wirkung zusammenwirken;
- ein Leistungsanschlussblock (32, 24), der die Leistungsklemmen (33, 34; 21, 23) enthält, am äußeren Körper mindestens eines der Geräte befestigt ist, um durch seine Ober- oder Unterseite zum Teil oder vollständig dessen obere oder unter Querseite (30c, 20d) zu bilden, und dass die Kopplungseinrichtungen (37, 26) Einsteckeinrichtungen mit Buckeln oder Schlitzen enthalten, die auf einer Ober- oder Unterseite des Leistungsanschlussblocks (32, 24) vorgesehen sind.

2. Elektrische Einheit nach Anspruch 1, **dadurch gekennzeichnet, dass** die Leistungsanschlussklemmen (33, 34; 21, 23; 42) vom Typ mit elastischem Käfig (13) sind, die eingerichtet sind, um den Anschluss von Kabeln mit Werkzeug und den Anschluss von Kontaktstiften ohne Werkzeug zu ermöglichen.

3. Elektrische Einheit nach Anspruch 1, **dadurch gekennzeichnet, dass** die Leistungsanschlussklemmen (33, 34; 21, 23; 42) oder die Kontaktstifte (62, 63; 52, 53) des mehrpoligen Blocks (50, 60) vom Typ mit radialer Klemmhülse sind.

4. Elektrische Einheit nach Anspruch 1, **dadurch gekennzeichnet, dass** die Kopplungseinrichtungen (37, 26) auf den Körpern der Geräte vorgesehen und eingerichtet sind, um eine direkte Befestigung der Geräte durch gegenseitige Verschiebung (Z2) lotrecht zu ihren Vorderseiten (30a, 20a) zu ermöglichen.

5. Elektrische Einheit nach Anspruch 1, **dadurch gekennzeichnet, dass** die Kopplungseinrichtungen (37, 26) Einrichtungen zum direkten Einrasten (38) des Körpers eines Geräts auf dem Körper des anderen Geräts enthalten, wobei die Einrichtungen die Blockierung des Geräts gegenüber jeder Abreißbewegung nach vorne gewährleisten.

6. Elektrische Einheit nach Anspruch 1, **dadurch gekennzeichnet, dass** eines der beiden mehrpoligen Geräte ein Schutzschalter (20) ist, und dass sie einen vorderen mehrpoligen Zusammenschaltungsblock (50) aufweist, der für die Speisung des Schutzschalters (20) vorgesehen ist, wobei der vordere mehrpolige Zusammenschaltungsblock eine solche Höhe hat, dass er eine Öffnung (20i) frei lässt, die zur Einführung eines Zusatzes in den Körper (20f) des Schalters (20) bestimmt ist.

7. Elektrische Einheit nach Anspruch 1, **dadurch gekennzeichnet, dass** eines der beiden mehrpoligen Geräte ein Schutzschalter (20) und das andere mehrpolige Gerät ein Schütz (30) ist, und dass sie mehrpolige Zusammenschaltungsblöcke (50, 60) enthält, die je eine solche Tiefe haben, dass ihre Vorderseite im Wesentlichen mit einer Ebene (P2) fluchtet, die die Vorderseite (20a') des Körpers des Schutzschalters und die Vorderseite (30a') des Anschlussblocks (35) des Schützes enthält.

8. Einheit, die zwei übereinander angeordnete Schaltgeräte, insbesondere eine Motorabgang-Einheit, wobei die zwei Geräte je einen äußeren Körper (30f, 20f) haben, der mit einer Vorderseite, mit einer Rückseite, mit oberen und unteren Querseiten und mit Seitenwänden versehen ist, und Einrichtungen zur Befestigung eines der Geräte an einem hinteren Träger enthält,
**dadurch gekennzeichnet, dass**
- mindestens eines der Geräte (30, 20) einen Leistungsanschlussblock (32, 24) enthält, der auf seinen äußeren Körper aufgesetzt ist und nahe seiner Vorderseite (30a, 20a) mit Klemmen (33, 23) versehen ist, die sich auf dieser über Anschlussdurchgänge (33a, 23a) öffnen,
- das untere Gerät (30) direkt am oberen Gerät (20) über seinen Leistunganschlussblock (32, 24) befestigt ist, der auf einer oberen oder unteren ebenen Seite (30c, 20d) mit ersten Buckeln oder Schlitzen (37) versehen ist, die dazu bestimmt sind, sich in zweite Buckel oder Schlitze (26) komplementärer Form einzufügen, die auf der oberen oder unteren Seite (20d, 30c) des anderen Geräts (20, 30) vorgesehen sind.

9. Einheit nach Anspruch 8, **dadurch gekennzeichnet, dass** die zwei Geräte (20, 30) elastische Klemmen (23, 33) aufweisen, und dass die Verbindung zwischen den elastischen Klemmen der zwei Geräte von einem mehrpoligen Zusammenschaltungsblock (60) mit Paaren von steifen Kontaktstiften (62, 63) gewährleistet wird, die dazu bestimmt sind, in die elastischen Klemmen einzudringen.

10. Einheit nach Anspruch 8, **dadurch gekennzeichnet, dass** die zwei Geräte (20, 30) Klemmen (23, 33) mit steifen Hülsen (72) aufweisen, und dass die Verbindung zwischen den Klemmen der zwei Geräte von einem mehrpoligen Zusammenschaltungsblock (60) mit Paaren von elastischen Kontaktstiften (62, 63) gewährleistet wird, die dazu bestimmt sind, mit elastischen Enden (71) in die Klemmen einzudringen.

11. Einheit nach Anspruch 9, **dadurch gekennzeichnet, dass** der mehrpolige Zusammenschaltungsblock (60) eingesetzt wird und den werkzeuglosen Kontakt in den elastischen Klemmen (23, 33) der zwei Geräte aufbaut, wobei diese vom Typ mit elastischem Käfig (13) sind, die für den Anschluss von Kabeln mit Werkzeug und für den Anschluss von Kontaktstiften ohne Werkzeug geeignet sind.
